# EUROPÄISCHE PATENTANMELDUNG

(11) **EP 3 184 372 A1**
(43) Veröffentlichungstag der Anmeldung: **28.06.2017**
(21) Anmeldenummer: 16466011.0
(22) Anmeldetag: 26.09.2016
(51) Int. Cl.: B60R 16/00

(54) **STEUEREINHEIT DER ANHÄNGERKUPPLUNG**

(30) Priorität: 30.09.2015 CZ 20150676
(71) Anmelder: Skoda Auto a.s., 29301 Mladá Boleslav (CZ)
(72) Erfinder: Pliva, Ondrej, 513 01 Semily (CZ)

(57) **Zusammenfassung**

Eine im Fahrzeug angeordnete Steuereinheit (1) der Anhängerkupplung, die mittels einer Steckverbindung (3) mit einem mit LED-Leuchten (6) bestückten Anhänger (2) verbunden ist. Die Steuereinheit (1) ermöglicht die Betätigung der Leuchtenfunktionen des angekoppelten Anhängers (2) aufgrund der Signale von anderen Steuereinheiten im Fahrzeug, die über einen Kommunikationsbus (7) übertragen und über die Leiter (8) von der Steuereinheit (1) an die Steckverbindung (3) für die Ankopplung des Anhängers (2) geleitet werden. Steuereinheit (1) umfasst eine Einspeisung (9) aus der Stromquelle des Fahrzeuges, einen Mikroprozessor (10), der den Hauptregelkreis der Steuereinheit (1) darstellt, und einen Aktor (11) für die Betätigung der Leuchtenfunktionen des angekoppelten Anhängers (2) mittels des Signals (12).

Die Darstellung der Erfindung liegt darin, dass die Steuereinheit (1) der Anhängerkupplung eine Stromquelle (13), die eine negative Spannung (18) erzeugt, und einen Aktor (14) für die Zuleitung der negativen Spannung (18) an die Leiter (8) und den Anhänger (2) aufweist. Der Aktor (14) wird durch ein Steuersignal (15) des Mikroprozessors (10) betätigt. Die Steuereinheit (1) umfasst einen Begrenzer (16) für die langsamere Aufladung der Kapazität (4) des Leiters (8) und der Kapazität (5) des Anhängers (2). Die Steuereinheit (1) umfasst einen Anpassungssteuerkreis (17), der die angepasste Spannung (19) für die Verarbeitung im Mikroprozessor (10) erzeugt.

## Beschreibung

### Technisches Gebiet

Die Erfindung betrifft eine Steuereinheit der Anhängerkupplung, welche eine Überwachung und Erkennung der Anhängerkupplung des Fahrzeuges ermöglicht.

### Bisheriger Stand der Technik

Die derzeit üblich verwendete Steuereinheit der Anhängerkupplung erfüllt die Funktion der Erkennung des angekoppelten Anhängers. Beim verriegelten Fahrzeug wird diese Funktion als Sicherung gegen den Diebstahl des angekoppelten Anhängers genutzt. Bei einer Abkopplung des Anhängers sendet die Steuereinheit ein Signal zur Aktivierung der Warnanlage. Diese Funktion wird durch die Versendung kurzer diagnostischen Pulse an die Leuchten (Blink-, Brems-, Nebelleuchte ...) des Anhängers und durch die Messung des Stromverbrauches des Anhängers realisiert. Zu diesem Zweck wird ein Steuerschalter verwendet, der primär für die Betätigung der Anhängerleuchte bestimmt ist. Diese diagnostischen Pulse sind derart kurz, dass die Lampen der Anhängerleuchten nicht blinken.

Solche Lösung ist im Dokument DE29907664U1 beschrieben, wo die Diebstahlwarnanlage zum Sichern eines über eine lösbare elektrische Steckverbindung mit einem Fahrzeug verbundenen Anhängers dient. Diese Vorrichtung umfasst einen Steuerschalter, der im Zusammenhang mit unautorisiertem Lösen und/oder Herstellen der Steckverbindung eine Signalanlage mit Hupe aktiviert.

Der Nachteil solcher Lösungen liegt darin, dass bei einigen modernen Anhängern die Leuchten derzeit komplett mit LED (Light Emitting Diode/Licht emittierende Diode) bestückt werden und genannte Funktionalität deshalb nicht genutzt werden kann. Die diagnostischen Pulse würden ein Blinken der LED-Leuchte verursachen und für ein komplett mit LED bestückten Anhänger erscheint diese Funktion als nicht zulässig, da der Anhänger dann gegen Diebstahl nicht gesichert ist.

### Darstellung der Erfindung

Die Aufgabe wird durch die Steuereinheit der Anhängerkupplung gelöst, die im Normalbetrieb aufgrund der über Kommunikationsbus übertragenen Signale die Leuchtenfunktionen des angekoppelten Anhängers betätigt. Die Steuereinheit ist im Fahrzeug eingebaut und die Signale, zur Veranschaulichung wird hier nur ein dargestellt, werden über die Leiter von der Steuereinheit der Anhängerkupplung zur Steckverbindung geleitet, wo der Anhänger angekoppelt ist. Die Steuereinheit der Anhängerkupplung umfasst einen Mikroprozessor, einen Aktor und eine Einspeisung aus der Stromquelle des Fahrzeuges. Der Mikroprozessor stellt den Hauptregelkreis der Steuereinheit der Anhängerkupplung dar. Der Aktor dient zur Betätigung der Leuchtenfunktionen des angekoppelten Anhängers mittels des Bediensignals.

Die Darstellung der Erfindung beruht in der neuen Lösung der inneren Schaltung der Steuereinheit der Anhängerkupplung. Die Steuereinheit der Anhängerkupplung umfasst eine Stromquelle, die eine negative Spannung V- erzeugt. Die Steuereinheit der Anhängerkupplung umfasst ferner einen Aktor, der das Zuleiten der negativen Spannung V- an die Leiter im Fahrzeug und Anhänger besorgt. Der Aktor der Steuereinheit der Anhängerkupplung wird mittels des Steuersignals des Mikroprozessors betätigt. Die Steuereinheit der Anhängerkupplung umfasst einen Begrenzer für eine langsamere Aufladung der Kapazität C_{V} des Leiters und der Kapazität C_{P} des Anhängers. Die Steuereinheit der Anhängerkupplung umfasst einen Anpassungsstromkreis, der eine angepasste Spannung für die Verarbeitung im Mikroprozessor erzeugt.

Die Darstellung dieser neuen Lösung der inneren Schaltung der Steuereinheit liegt darin, dass eine korrekte Funktion der Diagnostik der Ankopplung des Anhängers zur Anhängerkupplung des Fahrzeuges und zwar für beide Leuchtenvarianten des Anhängers, sowohl für Lampen, wie auch für LED, sichergestellt werden soll.

Das heißt erstens, dass die bestehende Funktion der Erkennung des Anhängers, welche bei der Ankopplung des Anhängers mit Lampen genutzt werden soll, beibehalten wird.

Zweitens soll die Erkennung des angekoppelten Anhängers mit LED-Leuchten durch Messung der Kapazität der Leiter des Anhängers sichergestellt werden. Für die Messung der Kapazität werden kurze diagnostische Pulse mit kleiner negativen Spannung V-, ca. 1V genutzt. Die kleine negative Spannung V- verursacht kein Blinken der LED-Leuchte. In diesem Modus sind die LED-Leuchten in Sperrrichtung und leuchten also nicht, d.h. das Blinken der LED-Leuchten nicht auftreten wird. Diese kurzen diagnostischen Pulse laden die Kapazität der Leiter C_{V} + C_{P} über ein Begrenzer auf, konkret über eine Konstantstromquelle oder Messwiderstand Rm. Aufgrund der Aufladungsgeschwindigkeit kann die Kapazität der angeschlossenen Leiter ermittelt werden. Zu diesem Zweck kann z.B. ein Kompensator genutzt werden. Dieser erzeugt durch den Vergleich der Spannung am überwachten Leiter mit der Spannung ½V- ein rechteckiges Signal, das gegenüber den diagnostischen Pulsen um die Zeit Δt verzögert ist. Dieses rechteckige Signal kann vom Mikroprozessor in der Steuereinheit der Anhängerkupplung einfach verarbeitet werden.

Wenn der überwachte Anhänger angekoppelt ist, sinkt die Kapazität der Leiter auf Cv, die Aufladungszeit der Kapazitäten der Leiter verkürzt sich und die Verzögerung Δt verringert sich. Der Mikroprozessor kann diese Änderung auswerten und ein Signal zur Warnanlage senden.

Das Prinzip der Erkennung des angekoppelten Anhängers liegt also in der Messung der Kapazität des Stromleiters im Anhänger. Mit der negativen Spannung V- wird die Kapazität des Leiters des Anhängers aufgeladen und die Steuereinheit wertet aufgrund der Ladegeschwindigkeit aus, ob ein Anhänger angekoppelt ist.

### Übersicht der Figuren der Zeichnungen

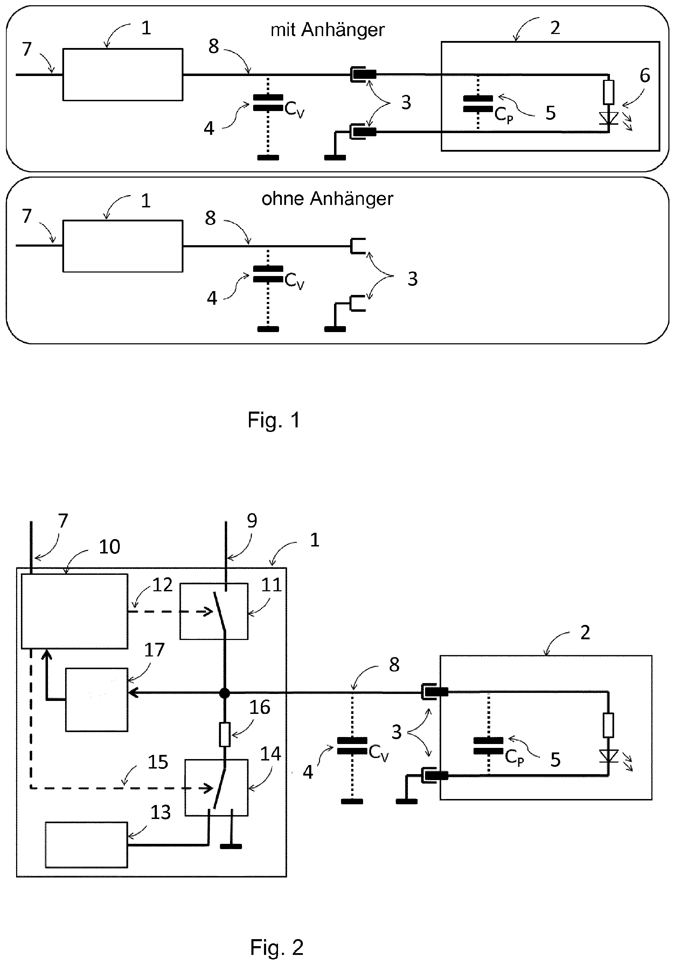

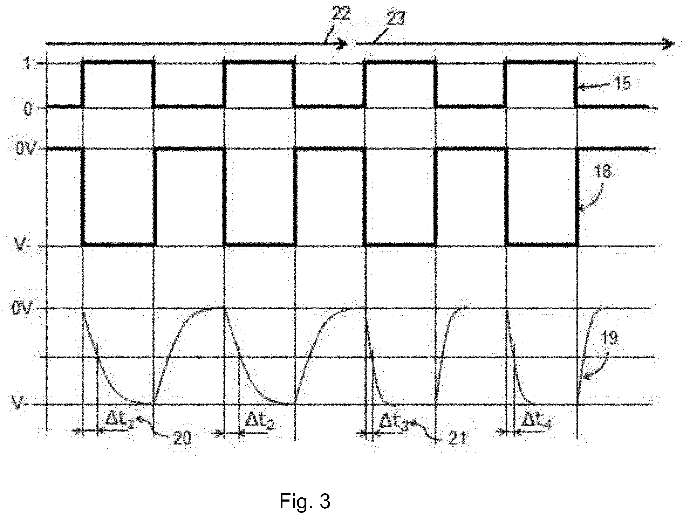

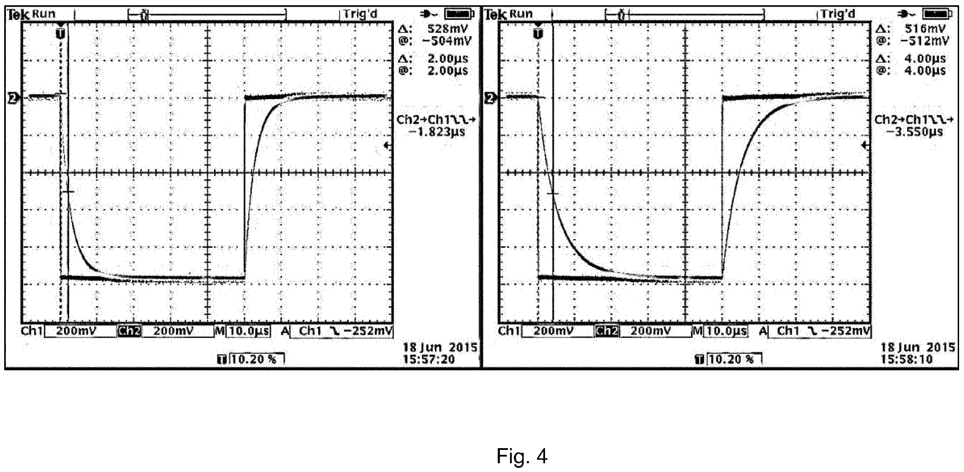

Die Fig. 1 zeigt in schematischer Darstellung die Schaltung der Anhängerkupplung mit dem Prinzip der Messung der Ankopplung des Anhängers an die Anhängerkupplung, die Fig. 2 ein Blockdiagramm der Schaltung der Steuereinheit der Anhängerkupplung mit Anhänger, Fig. 3 die Zeitverläufe der Signale und die Fig. 4 ein Beispiel der Prüfmessung.

### Ausführungsbeispiel der Erfindung

Die Fig. 1 zeigt in schematischer Darstellung die Anhängerkupplung mit der Möglichkeit der Ankopplung des Anhängers 2, wobei die Anhängerkupplung eine Steuereinheit 1 umfasst. Die Fig. 1 und 2 zeigen die im Fahrzeug eingebaute Steuereinheit der Anhängerkupplung 1. Die Steuereinheit der Anhängerkupplung 1 betätigt im Normalbetrieb aufgrund der über einen Kommunikationsbus 7 übertragenen Signale die Leuchtenfunktionen des angekoppelten Anhängers 2. Die Signale, zur Veranschaulichung wird hier nur ein dargestellt, werden über die Leiter 8 von der Steuereinheit 1 an die Steckverbindung 3 geleitet, wo der Anhänger 2 angekoppelt ist. Zur Anhängerkupplung ist ein Anhänger 2 angekoppelt, der komplett mit LED-Leuchten 6 bestückt ist. Bei allen Leuchten des Anhängers werden die LED's (light emitting diode / Licht emittierende Diode) eingesetzt, wobei zur Veranschaulichung nur eine dargestellt ist.

Die Fig. 1 und 2 zeigen die Steckverbindung 3 für die Ankopplung des Anhängers 2 zum Fahrzeug. Ferner zeigen die Fig. 1 und 2 die Leiter 8, zur Veranschaulichung wird hier nur ein Leiter 8 dargestellt, welche bestimmte Kapazität 4 C_{V} gegenüber dem Null-Potential des Fahrzeuges aufweisen. Analog haben die Leiter in dem angekoppelten Anhänger 2 auch bestimmte Kapazität 5 C_{P}. Der Leiter 8 im Fahrzeug verbindet elektrisch mittels der Steckverbindung 3 die Steuereinheit der Anhängerkupplung 1 mit dem angekoppelten Anhänger 2.

Die Fig. 1 und 2 zeigen den Kommunikationsbus 4, mittels dem die Steuereinheit 1 der Anhängerkupplung mit anderen Steuereinheiten im Fahrzeug kommuniziert.

Die in Fig. 2 dargestellte Steuereinheit 1 umfasst eine Einspeisung 9, einen Mikroprozessor 10 und einen Aktor 11. Die Einspeisung 9 der Steuereinheit erfolgt über den Leiter, der die Steuereinheit 1 der Anhängerkupplung aus der Stromquelle des Fahrzeuges einspeist. Der Mikroprozessor 10stellt den Hauptregelkreis der Steuereinheit 1 der Anhängerkupplung dar. Der Aktor 11 dient zur Betätigung der Leuchtenfunktionen des angekoppelten Anhängers 2 und dies kann zum Beispiel ein Transistor sein. Der Aktor 11 betätigt die Leuchtenfunktionen des angekoppelten Anhängers 2 mittels des Signals 12.

Die Erstmaligkeit der Lösung betrifft die innere Schaltung dieser Steuereinheit 1, welche neue Elemente umfasst. Zu diesen neuen Elementen der Steuereinheit 1 gehören die Quelle 13 der negativen Spannung, der Aktor 14, das Steuersignal 15, der Begrenzer 16 und der Anpassungsstromkreis 17. Die Quelle 13 erzeugt kleine negative Spannung 18 V-. Der Aktor 14 dient für das Leiten der negativen Spannung 18 V- an die Leiter 8 und den Anhänger 2. Der Aktor 14 wird durch Steuersignal 15 betätigt, das vom Mikroprozessor 10 erzeugt wird. Der Begrenzer 16 ermöglicht langsamere Aufladung der Kapazität 4 C_{V} des Leiters 8 und der Kapazität 5 C_{P} des Anhängers 2, damit diese Kapazitäten C_{P} und C_{V} nicht schnell aufgeladen werden. Den Begrenzer 16 kann zum Beispiel ein Resistor Rm (Messwiderstand), eine Konstantstromquelle bilden ... Der Anpassungsstromkreis 17 regelt und passt die Messspannung, d.h. die angepasste Spannung 19 so an, dass sie vom Mikroprozessor 10 bearbeitet werden kann. Als Anpassungsstromkreis 17 kann ein Kompensator, eine Kippschaltung, ein Stromkreis mit Spannungsverschiebung eingesetzt werden...

Das Prinzip der Erkennung des angekoppelten Anhängers 2 beruht in der Messung der Kapazität 5 des Leiters im Anhänger 2. In Fig. 1 ist diese Kapazität als C_{P} dargestellt. Für die Messung dieser Kapazität 5 wird die kleine negative Spannung 18 V- deswegen verwendet, da in diesem Modus die LED-Leuchten 6 des Anhängers 2 in der Sperrrichtung sind und darum kein unerwünschtes Leuchten auftreten kann. Mit dieser kleinen negativen Spannung 18 V- wird die oben genannte Kapazität 5 aufgeladen und aufgrund der Aufladungsgeschwindigkeit wertet die Steuereinheit 1 aus, ob ein Anhänger 2 angekoppelt ist. Da die Leiter 8 im Fahrzeug sowie die Steuereinheit 1 selbst bestimmte Kapazität 4 aufweisen, hier zusammenfassend als C_{V} bezeichnet, muss die Steuereinheit 1 die Differenz der gemessenen Kapazitäten auswerten. Beim Lösen des Anhängers 2 sinkt die Kapazität von C_{P} + C_{V} auf C_{V} und die Aufladungsgeschwindigkeit steigt. Nach Auswertung dieser Änderung sendet die Steuereinheit 1 über den Kommunikationsbus 7 ein Signal zur Aktivierung der Warnanlage.

Die Beschreibung des Blockdiagramms ist in Fig. 2 und 3 dargestellt.

Im Normalbetrieb betätigt die Steuereinheit 1 die Leuchten des angekoppelten Anhängers 2 mittels des Steuersignals 12 über den Aktor 11.

Bei aktiver Funktion der Überwachung des angekoppelten Anhängers 2 ist der Ablauf wie folgt. In der Steuereinheit 1 der Anhängerkupplung wird von der Quelle 13 der negativen Spannung 18 eine kleine negative Spannung V- erzeugt. Der Mikroprozessor 10 leitet mittels des Steuersignals 15 mithilfe des Aktors 14 diese Spannung 18 über den Begrenzer 16 zum Leiter 8 im Fahrzeug und dem angekoppelten Anhänger 2. Diese Spannung 18 lädt die Kapazität der Leiter 5 C_{P} im Anhänger 2 sowie die Kapazität der Leiter 4 C_{V} im Fahrzeug auf. Der Anpassungsstromkreis 17 regelt und passt die Spannung 18 an und leitet diese angepasste Spannung 19 nachfolgend zur Verarbeitung im Mikroprozessor 10 weiter. Ist der Anhänger 2 angekoppelt (22), werden diese Kapazitäten C_{V} + C_{P} auf bestimmten Spannungswert in bestimmter Zeit Δt₁ bzw. Δt₂ (s. 20 in Fig. 3) aufgeladen. Ist der Anhänger abgekoppelt (23), sinkt die aufzuladende Kapazität auf C_{V} und die Aufladungsgeschwindigkeit erhöht sich auf Δt₃ bzw. Δt₄(s. 22). Diese Veränderung wertet der Mikroprozessor 10 aus und sendet über den Kommunikationsbus 7 ein Signal zur Aktivierung der Warnanlage.

Fig. 4 zeigt ein Beispiel der Prüfung durch eine Messung. Die Prüfmessung wurde an der originellen Fahrzeuginstallation mit einem komplett mit LED-Leuchten 6 bestückten Testanhänger 2 durchgeführt. Im linken Teil der Fig. 4 ist die Prüfmessung mit abgekoppeltem Anhänger 2: Δt=2µs und im rechten Teil der Fig. 4 die Prüfmessung mit angekoppeltem Anhänger 2: Δt=4µs dargestellt.

Als Quelle der Testpulse wurde ein NF-Generator genutzt. Konfiguration:
Output: rechter Blinker, Rm=12kΩ, Fgen.=10kHz, V-=1V.

Aus der Prüfmessung geht hervor, dass die Veränderung der Aufladungsgeschwindigkeit ausreichend groß ist, damit sie einfach erkennbar ist. Während der Messung ist kein Blinken der LED-Leuchte 6 am angekoppelten Anhänger aufgetreten.

## Patentansprüche

1. Eine im Fahrzeug angeordnete Steuereinheit (1) der Anhängerkupplung, die mittels einer Steckverbindung (3) mit einem mit LED-Leuchten (6) bestückten Anhänger (2) verbunden ist und die aufgrund der über einen Kommunikationsbus (7) übertragenen Signale von weiteren Steuereinheiten, die über die Leiter (8) von der Steuereinheit (1) an die Steckverbindung (3) für die Ankopplung des Anhängers (2) geleitet werden, die Leuchtenfunktionen des angekoppelten Anhängers (2) betätigt, wobei die Steuereinheit (1) eine Einspeisung (9) aus der Stromquelle des Fahrzeuges, einen Mikroprozessor (10) als Hauptregelkreis der Steuereinheit (1) und einen Aktor (11) für die Betätigung der Leuchtenfunktionen des angekoppelten Anhängers (2) mittels des Signals (12) aufweist, **dadurch gekennzeichnet, dass** die Steuereinheit (1) eine Stromquelle (13), die eine negative Spannung (18) erzeugt, und einen Aktor (14) für die Zuleitung der negativen Spannung (18) an die Leiter (8) und den Anhänger (2) umfasst.

2. Steuereinheit (1) der Anhängerkupplung nach Anspruch 1 **dadurch gekennzeichnet, dass** der Aktor (14) durch das Steuersignal (15) des Mikroprozessors (10) betätigt wird.

3. Steuereinheit (1) der Anhängerkupplung nach vorgenannten Ansprüchen **dadurch gekennzeichnet, dass** die Steuereinheit (1) einen Begrenzer (16) für die langsamere Aufladung der Kapazität (4) des Leiters (8) und der Kapazität (5) des Anhängers (2) umfasst.

4. Steuereinheit (1) der Anhängerkupplung nach vorgenannten Ansprüchen **dadurch gekennzeichnet, dass** die Steuereinheit (1) einen Anpassungsstromkreis (17) umfasst, der die angepasste Spannung (19) für die Verarbeitung im Mikroprozessor (10) erzeugt.
